# FASCICULE DE BREVET EUROPEEN

(11) **EP 3 014 644 B1**
(45) Date de publication et mention de la délivrance du brevet: **27.11.2019**
(21) Numéro de dépôt: 14735497.1
(22) Date de dépôt: 24.06.2014
(51) Int. Cl.: H01G 11/10, H01G 11/78, H01G 15/00, H01G 11/84, H01M 2/10, H01M 2/20, H01M 10/052

(54) **PROCÉDÉ DE FABRICATION D'UN MODULE DE STOCKAGE D'ÉNERGIE ÉLECTRIQUE, OUTIL DE FABRICATION ASSOCIÉ ET MODULE DE STOCKAGE D'ÉNERGIE ÉLECTRIQUE OBTENU EN METTANT EN OEUVRE LEDIT PROCÉDÉ**
VERFAHREN ZUM HERSTELLEN EINES ELEKTRISCHEN ENERGIESPEICHERMODULS, WERKZEUG ZUR DURCHFÜHRUNG EINES SOLCHEN VERFAHRENS, ELEKTRISCHES ENERGIESPEICHERMODUL HERGESTELLT DURCH DAS VERFAHREN
PROCESS FOR PRODUCING AN ELECTRICAL ENERGY STORAGE MODULE, TOOL FOR IMPLEMENTING SAID PROCESS, ELECTRICAL ENERGY STORAGE MODULE OBTAINED THROUGH THE PROCESS

(30) Priorité: 27.06.2013 FR 1356217
(43) Date de publication de la demande: 04.05.2016
(73) Titulaire: Blue Solutions, 29500 Ergué Gabéric (FR)
(72) Inventeur: GOUZERH, Jean-Marc, 29000 Quimper (FR); SAGEL, Philippe, 29510 Edern (FR); LE GALL, Laurent, 29500 Ergue Gaberic (FR); JUVENTIN-MATHES, Anne-Claire, 29000 Quimper (FR)
(74) Mandataire: Regimbeau
(86) Numéro de dépôt international: PCT/EP2014/063300
(87) Numéro de publication internationale: WO 2014/206992

(56) Documents cités:
- CN-A- 102 800 499
- FR-A1- 2 916 306
- US-A1- 2008 081 252
- US-A1- 2010 134 940
- US-A1- 2012 121 946
- US-A1- 2013 149 919

## Description

### DOMAINE TECHNIQUE

La présente invention concerne le domaine technique général de la fabrication d'un module de stockage d'énergie électrique incluant une pluralité d'ensembles de stockage d'énergie électrique.

On entend, dans le cadre de la présente invention, par « *ensemble de stockage d'énergie électrique »,* soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et un électrolyte liquide ou solide entre l'anode et la cathode).

### PRESENTATION GENERALE DE L'ART ANTERIEUR

On connaît dans l'état de la technique des procédés de fabrication de module de stockage d'énergie électrique. Ces procédés de fabrication diffèrent en fonction du type de module souhaité.

### Utilisation d'un organe de maintien

On connaît des modules comprenant un boîtier dans lequel sont disposés plusieurs ensembles de stockage d'énergie électrique.

Chaque ensemble est par exemple du type supercondensateur tubulaire. Il comprend une enveloppe comportant un corps tubulaire, un enroulement capacitif et un électrolyte liquide à l'intérieur de l'enveloppe. Pour chaque ensemble, deux couvercles sont utilisés pour fermer les deux extrémités de l'enveloppe. Chaque couvercle est connecté électriquement à l'enroulement capacitif.

À l'intérieur du module, les ensembles sont reliés deux à deux alternativement au niveau de leurs extrémités supérieures et inférieures en utilisant des barrettes de liaison. La connexion d'un couvercle avec une barrette de liaison est réalisée par emmanchement en force de la barrette sur la borne de connexion du couvercle, et/ou par soudure et/ou par vissage.

Le procédé de fabrication d'un tel module peut comprendre la mise en place d'un organe de maintien électriquement isolant tel que décrit dans la demande de brevet français déposée sous le numéro FR 1 253 982. Cet organe de maintien permet d'éviter une mise en contact électrique inopinée des ensembles entre eux.

L'organe de maintien comprend des ouvertures destinées à recevoir chacune un ensemble respectif. Les dimensions de chaque ouverture sont supérieures à l'espace théoriquement occupé par chaque ensemble. Ceci permet de compenser :
- les jeux de montage induits par l'assemblage des différentes pièces constituant l'ensemble (défauts de centrage des couvercles relativement au corps tubulaire de l'enveloppe), et
- la marge d'erreur sur les dimensions des différentes pièces constituant les ensembles (tolérances de fabrication).

Toutefois, l'utilisation d'un organe de maintien augmente l'encombrement du module puisqu'il est nécessaire de prévoir des espaces entre les ensembles pour tenir compte des tolérances de fabrication. Il est possible de choisir un encombrement plus réduit mais on augmenterait alors sensiblement la proportion d'ensembles mis au rebut, ce qui augmenterait considérablement les coûts de fabrication et ne constituerait pas un modèle économiquement viable.

Le procédé de fabrication peut comprendre alternativement la mise en place d'osselets électriquement isolant entre les couvercles des ensembles adjacents pour les maintenir en position les uns par rapport aux autres.

Cependant, la conception des osselets doit tenir compte des variations de dimensions des ensembles adjacents (d'un maximum de quatre au total) et est donc difficile à mettre en œuvre au vu des tolérances de fabrication des ensembles.

### Utilisation de bi-couvercle

On connaît également des modules dans lesquels les ensembles sont reliés deux à deux en utilisant une pièce longitudinale monobloc - dite bi-couvercle - formant à la fois couvercle et barrette de liaison. Une telle pièce longitudinale est notamment décrite dans le document publié sous le numéro FR 2 894 381.

Le procédé de fabrication comprend donc la mise en place de bi-couvercles sur lesquels sont disposés les ensembles.

L'utilisation d'un bi-couvercle pour connecter électriquement deux ensembles adjacents permet d'accroître les performances électriques et thermiques des modules.

Toutefois, l'utilisation de bi-couvercles augmente la complexité du procédé de fabrication des modules.

On connaît déjà d'après le document US 2009/0123830 un module de stockage d'énergie électrique incluant plusieurs ensembles qui comprennent chacun un élément de stockage d'énergie disposé à l'intérieur d'une enveloppe tubulaire. Une barrette de jonction relie ensemble deux ensembles de stockage d'énergie voisins.

Toutefois, ce document ne décrit pas de procédé ou d'outils de fabrication de ce module et notamment ne décrit pas le fait que ces ensembles de stockage d'énergie soient placés sur un support, ni qu'ils soient plaqués les uns contre les autres par déplacement contre des plans de référence perpendiculaires entre eux.

On connaît également d'après le document US 2013/0149919, un module de stockage d'énergie électrique incluant deux ensembles de stockage d'énergie dont chacun comporte une enveloppe externe recevant intérieurement un élément de stockage d'énergie.

Ce document précise et représente sur la figure 9 que ces ensembles peuvent être montés à l'aide d'un gabarit de montage. Toutefois, compte-tenu de la forme de ce gabarit, qui est muni d'encoches semi-circulaires de réception des extrémités desdits ensembles, il est évident que ces derniers ne peuvent pas être plaqués les uns contre les autres, puisqu'il existe un espace entre les différentes encoches.

Un but de la présente invention est de proposer un procédé de fabrication de module permettant d'obtenir un module de stockage d'énergie électrique d'encombrement minimal à l'aide d'un procédé de fabrication relativement simple et peu coûteux.

### PRESENTATION DE L'INVENTION

À cet effet, l'invention propose un procédé de fabrication d'un module de stockage d'énergie électrique incluant des ensembles de stockage d'énergie électrique, chaque ensemble comportant une enveloppe externe et un élément de stockage d'énergie électrique disposé à l'intérieur de l'enveloppe, le procédé comprenant les étapes suivantes :
- la mise en place d'au moins un manchon électriquement isolant autour de l'enveloppe d'au moins un ensemble de sorte qu'un manchon soit interposé entre chaque paire d'ensembles adjacents, l'au moins un manchon recouvrant au moins partiellement l'enveloppe de l'au moins un ensemble,
- le placement de l'une des extrémités de chaque ensemble sur un support, de sorte que les axes longitudinaux des ensembles s'étendent sensiblement parallèlement entre eux,
- l'application d'au moins une force sur les ensembles selon une direction sensiblement perpendiculaire aux axes longitudinaux des ensembles, l'au moins une force tendant à plaquer les ensembles les uns contre les autres,
- le positionnement d'au moins une barrette électriquement conductrice sur les ensembles de sorte à connecter électriquement lesdits ensembles, la position de l'au moins une barrette étant prédéterminée relativement à au moins un plan de référence du support contenant une direction parallèle à celle des axes longitudinaux des ensembles,
- la liaison, notamment par soudage, de l'au moins une barrette sur les ensembles.

On entend dans le cadre de la présente invention, par « manchon », un élément annulaire, tel qu'une bague, continue ou non sur 360°.

Ce manchon peut être élastique pour faciliter sa mise en place et son maintien lors de la phase d'assemblage. En variante, le manchon peut être réalisée dans un matériau non élastique et comprendre une fente - telle qu'une fente oblique, une fente curviligne, etc. - sur toute sa hauteur. Cette fente confère une élasticité radiale lui permettant d'être insérée et de se maintenir plus facilement sur l'ensemble. En variante, le manchon peut être réalisé dans un matériau thermo-rétractable.

Le fait de munir le (ou les) ensemble(s) d'un manchon électriquement isolant permet de s'affranchir de la difficulté relative à l'utilisation d'osselets destinés à être positionnés entre différents ensembles. En effet, la mise en place du manchon électriquement isolant dépend uniquement des jeux de montage d'un unique ensemble, alors que la mise en place d'un osselet dépend des jeux de montage de plusieurs (notamment quatre) ensembles adjacents.

Par ailleurs, le fait de plaquer les ensembles munis des manchons électriquement isolant les uns contre les autres permet d'éviter la génération de volume mort entre les ensembles adjacents, et donc permet de limiter l'encombrement du module.

Enfin, le lecteur appréciera que la position de la barrette est fonction de plans de référence, indépendamment des positions réellement occupées par les ensembles, la position réelle de chaque ensemble pouvant varier d'un module à l'autre du fait des jeux de montage liés à la variabilité de dimensionnement des différentes pièces constituant le module.

Le fait de définir la position de la (ou des) barrette(s) en fonction de la position d'un ou plusieurs plans de référence du support (et non des positions réelles des ensembles) permet d'obtenir un procédé de fabrication de module dans lequel la position des barrettes relativement à un référentiel extérieur au module est sensiblement constante entre deux modules identiques, même si les positions réelles des ensembles varient entre ces deux modules identiques.

Ceci présente un avantage en ce qui concerne les bornes de sortie du module destinées à être connectées à des organes extérieurs. En effet, ces bornes de sortie sont fixées à des barrettes du module. En définissant la position des barrettes par rapport à des plans de référence, le procédé de fabrication permet d'obtenir un module dans lequel la position des bornes de sortie (par rapport à un référentiel extérieur au module) est absolument identique d'un module à l'autre.

Des aspects préférés mais non limitatifs du procédé selon l'invention sont les suivants :
- la position de l'au moins une barrette est définie préalablement à l'étape de placement des ensembles de sorte que ladite position est indépendante des positions réelles des ensembles ;
- le ou les plans de référence ne contiennent aucun des axes longitudinaux des ensembles, l'étape d'application d'une force tendant à plaquer les ensembles les uns contre les autres et contre le ou les plans de référence du module ;
- les ensembles sont plaqués contre au moins deux plans de référence, les plans de référence étant perpendiculaires entre eux, au moins l'un des plans de référence étant de préférence un plan de symétrie des ensembles ,
- on applique au moins deux forces de direction distinctes dans le plan normal aux axes longitudinaux sur les ensembles afin de les plaquer les uns contre les autres ;
- le procédé comprend, préalablement à l'étape d'application d'au moins une force, une étape consistant à prédéterminer la position de l'au moins une barrette en tenant compte d'une gamme de positions pouvant être occupées par les ensembles en fonction des jeux de montage du module. Toutefois, en connaissant les tolérances de fabrication des ensembles, on peut déterminer une seule fois pour tous les modules la forme et la disposition des barrettes de sorte que chacune des barrettes soit en contact seulement avec les deux ensembles qu'elle doit relier électriquement ;
- lors de l'étape de mise en place, chaque manchon est positionné de sorte à recouvrir l'une des extrémités d'une enveloppe respective, l'étape de placement étant mise en œuvre de sorte que les manchons des ensembles adjacents sont situés sur des extrémités longitudinales opposées des ensembles disposés côte à côte ;
- le manchon est constitué dans un matériau thermo-rétractable, l'étape de mise en place comprenant une sous-étape consistant à chauffer le manchon ;
- chaque enveloppe comporte un corps comprenant une paroi latérale et au moins une extrémité ouverte, le procédé comprenant une étape consistant à disposer un couvercle sur chaque extrémité ouverte du corps pour fermer l'au moins une extrémité ouverte, chaque couvercle incluant une paroi couvrante composée :
   ∘ d'une face interne destinée à être connectée à l'élément de stockage d'énergie électrique, et
   ∘ d'une face externe sensiblement plane, notamment dépourvue de pion en son centre et de bord à sa périphérie ;
- l'étape de positionnement de l'au moins une barrette comprend les sous-étapes consistant à :
   ∘ agencer l'au moins une barrette sur un masque de maintien à une position prédéterminée relativement audit ou audits plans de référence, et
   ∘ apposer le masque de maintien des moyens de positionnement du support ;
- l'étape de liaison comprend une sous-étape consistant à déplacer au moins un ensemble, notamment chaque ensemble, selon une direction sensiblement parallèle aux axes longitudinaux des ensembles, de sorte que les ensembles soient en appui contre l'au moins une barrette ;
- lors de la sous-étape consistant à déplacer au moins un ensemble selon une direction sensiblement parallèle aux axes longitudinaux des ensembles, on déplace les ensembles et les barrettes de sorte que les barrettes soient en appui contre un plan de référence du support, dit perpendiculaire, essentiellement normal aux axes longitudinaux des ensembles placés sur le support, (à savoir horizontal) ;
- le procédé comprend en outre une étape de réalisation de paires élémentaires d'ensembles préalablement à l'étape de placement, ladite étape de réalisation comprenant les sous-étapes consistant à :
   i) disposer deux ensembles de sorte que leurs axes longitudinaux s'étendent sensiblement parallèlement,
   ii) pousser les deux ensembles l'un contre l'autre,
   iii) installer et souder une barrette de connexion sur les deux ensembles, la position de la barrette de connexion sur les deux ensembles étant notamment prédéterminée,
   iv) répéter les étapes i) à iii) pour obtenir une pluralité de paires élémentaires,
      l'étape de placement des ensembles consistant à placer l'extrémité soudée à la barrette de connexion de chaque paire élémentaire sur le support de sorte que la barrette de connexion de chaque paire élémentaire soit en contact avec le support ;
- lors de l'étape de déplacement des ensembles selon les axes longitudinaux, on déforme la barrette reliée à la paire d'ensembles de sorte que la barrette située à l'extrémité longitudinale opposée soit en appui avec le plan de référence perpendiculaire, la barrette comportant de préférence pour ce faire deux portions rigides reliées aux ensembles et une portion déformable s'étendant entre les deux portions rigides ;
- lors de l'étape de réalisation de paires élémentaires (avant le placement des paires sur le support), la sous-étape consistant à installer et souder comprend le déplacement d'au moins un ensemble, notamment chaque ensemble, selon une direction sensiblement parallèle aux axes longitudinaux des ensembles, de sorte que les ensembles soient en appui contre la barrette de connexion, et éventuellement que la barrette soit en contact avec un plan de référence perpendiculaire aux axes longitudinaux.

L'invention concerne également un outil de fabrication pour la mise en œuvre d'un procédé de fabrication d'un module de stockage d'énergie électrique tel que précité, incluant des ensembles de stockage d'énergie électrique, chaque ensemble comportant une enveloppe externe et un élément de stockage d'énergie électrique disposé à l'intérieur de l'enveloppe, au moins un manchon électriquement isolant étant mis en place autour de l'enveloppe externe d'au moins l'un des ensembles de sorte qu'un manchon soit interposé entre chaque paire d'ensembles adjacents, l'outil comprenant :
- au moins un support pour le placement de l'une des extrémités de chaque ensemble, de sorte que les axes longitudinaux des ensembles s'étendent sensiblement parallèlement entre eux,
- au moins un applicateur de force pour l'application d'au moins une force sur les ensembles selon une direction sensiblement perpendiculaire aux axes longitudinaux des ensembles, l'au moins une force tendant à plaquer les ensembles les uns contre les autres.

Des aspects préférés mais non limitatifs de l'outil selon l'invention sont les suivants :
- l'outil comprend des moyens de positionnement, solidaires du support, d'au moins une barrette électriquement conductrice, éventuellement par le biais d'un masque de maintien, sur les ensembles de sorte à connecter électriquement lesdits ensembles, la position de l'au moins une barrette étant prédéterminée relativement à au moins un, notamment deux, plans de référence du support contenant une direction parallèle aux axes longitudinaux des ensembles, l'un au moins des plans étant de préférence délimité par une ou des parois de l'outil ;
- le support comprend au moins deux plateaux, chaque plateau étant destiné à recevoir un ensemble respectif, au moins un plateau, notamment chaque plateau, étant mobile en translation pour déplacer au moins un ensemble, notamment chaque ensemble selon une direction sensiblement parallèle aux axes longitudinaux des ensembles, de sorte que les ensembles soient en appui contre l'au moins une barrette électriquement conductrice, et éventuellement que la barrette soit en contact avec un plan de référence perpendiculaire aux axes longitudinaux, soit horizontal ;
- au moins un plateau, notamment chaque plateau, est mobile en translation selon une direction perpendiculaire aux axes longitudinaux des ensembles pour plaquer au moins un ensemble, notamment chaque ensemble, contre les autres ensembles ;
- le support est composé de deux bâtis destinés à recevoir chacun au moins un ensemble, lesdits bâtis étant mobiles en translation l'un par rapport à l'autre entre :
   ∘ une position écartée où les deux bâtis sont distants l'un de l'autre pour permettre le passage de câblage du module entre ceux-ci, et
   ∘ une position rapprochée où les bâtis sont en contact l'un avec l'autre.

L'invention concerne également un module de stockage d'énergie électrique incluant des ensembles de stockage d'énergie électrique, chaque ensemble comportant une enveloppe externe et un élément de stockage d'énergie électrique disposé à l'intérieur de l'enveloppe, le module comprenant en outre :
- au moins un manchon électriquement isolant autour de l'enveloppe d'au moins l'un des ensembles de sorte qu'un manchon soit interposé entre chaque paire d'ensembles adjacents, l'au moins un manchon recouvrant au moins partiellement l'enveloppe externe de l'ensemble, les ensembles étant plaqués les uns contre les autres de sorte que chaque manchon soit en contact avec au moins l'un des ensembles adjacents,
au moins une barrette électriquement conductrice sur les ensembles de sorte à connecter électriquement lesdits ensembles, la position de l'au moins une barrette étant prédéterminée relativement à au moins un plan de référence contenant au moins une direction parallèle aux axes longitudinaux des ensembles, ladite barrette étant une pièce qui s'étend longitudinalement et qui comprend une portion déformable entre deux portions rigides, chacune des portions rigides étant reliée respectivement à un ensemble.Des aspects préférés mais non limitatifs du module selon l'invention sont les suivants :
- la position de l'au moins une barrette est indépendante de la position réelle des ensembles du module. Autrement dit, les plans de références sont définis indépendamment de la position réelle des ensembles dans le module ;
- le module comprend en outre un boîtier dans lequel sont insérés les ensembles, le boîtier incluant au moins une paroi et un fond, le au moins un plan de référence étant défini relativement à la ou l'au moins une des parois du boîtier, par exemple une paroi sur laquelle sont agencées les bornes de sortie du boîtier. On peut en effet positionner les parois du boîtier relativement au ou aux plans de référence du support de sorte que leur position ne varie pas relativement à ces plans ;
- la portion déformable est une portion amincie (en largeur ou en épaisseur) dont l'épaisseur est inférieure à l'épaisseur des portions rigides. Les barrettes peuvent être placées entre les ensembles de sorte qu'au moins une des barrettes est légèrement pliée pour compenser les différences de hauteur des ensembles ;
- l'enveloppe d'au moins un ensemble, notamment chaque ensemble, comprend un soufflet permettant de faire varier la hauteur de l'ensemble.

L'invention concerne également un lot de deux modules selon l'invention dans lequel la position des barrettes relativement aux boîtiers respectifs des modules est identique dans les deux modules alors que la position des ensembles relativement auxdits boîtiers est différente.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- La figure 1 illustre un procédé de fabrication d'un module de stockage d'énergie électrique,
- La figure 2 est une vue en perspective d'un premier mode de réalisation d'un outil pour la fabrication d'un module de stockage d'énergie électrique,
- Les figures 3 et 4 sont respectivement des vues de dessus et de côté schématiques d'un deuxième mode de réalisation d'un outil pour la fabrication d'un module de stockage d'énergie électrique,
- la figure 5A est une vue en perspective d'un outil selon une variante du deuxième mode de réalisation de l'invention,
- la figure 5B représente une vue en perspective d'un détail de l'outil de la figure 5A,
- la figure 5C est une vue en perspective partielle de l'outil des figures 5A et 5C lorsque les ensembles et les barrettes sont placés dans celui-ci,
- la figure 5D est une vue en perspective de l'outil lorsque le couvercle est rabattu sur le support.

### DESCRIPTION DE L'INVENTION

On va maintenant décrire différents modes de réalisation de l'invention en référence aux figures. Dans ces différentes figures, les éléments équivalents portent les mêmes références numériques. Par ailleurs, dans la suite du texte, les termes « vertical », « horizontal », « dessus » ou « sur », et « dessous » ou « sous » seront utilisés en référence à un référentiel orthonormé dont l'un des axes est sensiblement parallèle aux axes longitudinaux des ensembles du module. Cet axe sensiblement parallèle aux axes longitudinaux des modules sera considéré comme l'axe vertical dans les exemples décrits.

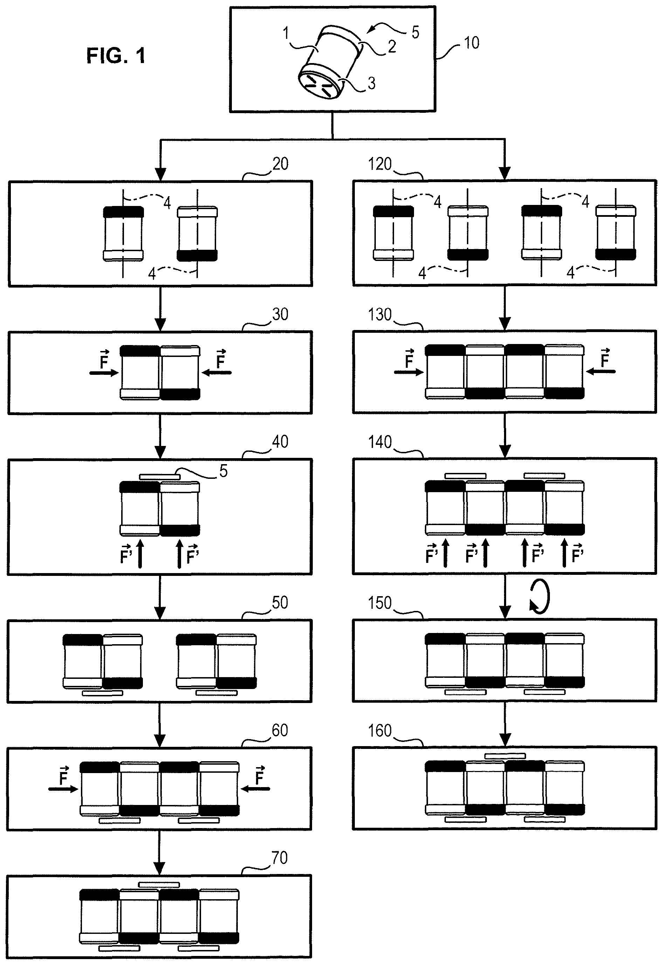

On a illustré aux figures 1 à 5 des exemples de procédés et d'outils de fabrication d'un module de stockage d'énergie électrique.

### 1. Module de stockage d'énergie électrique

Le module comprend un boîtier dans lequel sont logés des ensembles de stockage d'énergie électrique 5. Ces ensembles 5 sont coiffés de couvercles 2, et sont connectés entre eux (en série ou en parallèle) en utilisant des barrettes électriquement conductrices 6.

### 1.2. Ensemble de stockage d'énergie électrique

Chaque ensemble 5 comporte une enveloppe externe 1 contenant un élément de stockage d'énergie électrique.

L'élément est par exemple une bobine constituée de complexes et de séparateur enroulés conjointement en spire pour former la bobine. On entend, dans le cadre de la présente invention, par « *complexe »,* un empilement comportant au moins deux couches, notamment deux couches d'électrodes destinées à former les électrodes positive et négative du complexe.

Le corps 1 est de forme cylindrique et comprend une paroi latérale. Il peut également comprendre un fond à l'une de ses extrémités et être ouverte à son autre extrémité pour permettre l'insertion de l'élément de stockage dans l'enveloppe. Dans ce cas, la face externe du fond est de préférence sensiblement plane - pour permettre le soudage d'une barrette en tout point de sa surface.

En variante, le corps 1 peut être ouvert à ses deux extrémités.

Dans tous les cas, chaque extrémité ouverte du corps est fermée par un couvercle 2.

### 1.3. Couvercle

Chaque couvercle 2 comprend une paroi couvrante pour fermer l'extrémité ouverte du corps 1. Cette paroi couvrante comprend deux faces :
- une face interne destinée à être connectée à l'élément de stockage d'énergie, et
- une face externe destinée à être liée, notamment par soudage, à une barrette.

De préférence, la face externe du couvercle est sensiblement plane. Plus précisément, cette face externe est de préférence dépourvue de pion en son centre et de bord à sa périphérie. Ceci permet de maximiser la surface du couvercle pouvant être soudée à la barrette. On augmente ainsi la latitude de soudage de la barrette sur le couvercle, la position de la barrette pouvant varier assez considérablement relativement à la position de l'ensemble sur lequel elle est soudée, comme il sera décrit plus en détail dans la suite. L'invention pourrait toutefois être réalisée avec un ensemble comprenant un pion sur sa face externe située à au moins l'une de ses extrémités.

Chaque couvercle peut également comprendre une jupe à la périphérie de la paroi couvrante, cette jupe étant destinée à recouvrir partiellement la paroi latérale de l'enveloppe.

Avantageusement, l'enveloppe, notamment son corps 1, peut comprendre un soufflet situé notamment au niveau de la paroi latérale de l'enveloppe. Ce soufflet, non représenté sur les figures, permet de faire varier la hauteur de l'ensemble afin de compenser les éventuelles variations de hauteur des différents ensembles, liées notamment aux tolérances de fabrication des différentes pièces ou encore aux jeux de montage résultant de leur assemblage.

### 1.4. Barrette électriquement conductrice

Comme indiqué précédemment, les ensembles du module sont reliés deux à deux au niveau de leurs extrémités supérieure et inférieure en utilisant des barrettes.

Chaque barrette est par exemple une plaque sensiblement plane s'étendant longitudinalement et composée par exemple de portions de rigidités différentes, même si cela n'est pas essentiel pour parvenir à réaliser l'invention. Notamment, chaque barrette peut comprendre :
- deux portions rigides, chacune étant destinée à être mise en contact avec un couvercle respectif de deux ensembles de stockage adjacents,
- une portion déformable entre les deux portions rigides.

La présence d'une portion déformable sur la barrette permet de faciliter sa déformation en pliage sans rupture en vue de sa liaison sur l'ensemble, notamment en garantissant l'appui de la barrette sur les ensembles même si leurs hauteurs sont différentes. Ceci permet de garantir la qualité de la liaison. Ceci est particulièrement avantageux dans le cas où la liaison de la barrette sur l'ensemble est réalisée par soudage, notamment LASER, puisqu'un contact intime est nécessaire pour réaliser efficacement un soudage à l'aide de cette technologie.

La différence de rigidité des différentes portions constituant la barrette peut être obtenue par une variation de l'épaisseur de la plaque longitudinalement. Notamment, la portion déformable peut être une portion amincie d'épaisseur inférieure à l'épaisseur des portions rigides. Elle peut également être réalisée à l'aide d'une pliure ou d'un décrochement en partie centrale de la barrette. La barrette peut également être composée d'une pluralité de feuilles superposées et reliées entre elles, notamment par soudage, à chacune de leurs extrémités ou d'une pluralité de fils tressés ensembles pour former la barrette, ce qui confère également une bonne flexibilité à la barrette dans les endroits où elle n'est pas reliée aux ensembles.

### 1.5. Manchon électriquement isolant

Le module comprend également des manchons électriquement isolant sur les ensembles. Le matériau électriquement isolant constituant le manchon est par exemple un élastomère, notamment de l'éthylène-propylène-diène monomère (EPDM). L'utilisation d'un manchon en EPDM permet réduire l'effet des chocs externes sur les ensembles grâce aux propriétés amortissantes de l'EPDM et de s'adapter aux variations de dimensions dues aux tolérances de fabrication des ensembles.

Chaque manchon entoure un ensemble respectif, et recouvre tout ou partie de l'enveloppe.

Dans certains modes de réalisation, le module comprend un manchon par ensemble. Dans d'autres modes de réalisation, le module comprend un nombre de manchon inférieur au nombre d'ensemble, les manchons étant disposés de sorte qu'un manchon soit interposé entre chaque paire d'ensembles adjacents, notamment qu'un manchon soit interposé entre chaque paire d'ensembles à chaque extrémité des ensembles.

Chaque manchon peut présenter une forme annulaire au repos, tel qu'une bague continue ou non sur 360°. En variante, le manchon peut présenter une forme sensiblement plane au repos, tel qu'un ruban souple, et être disposé et fixé autour de l'ensemble.

La présence d'un manchon isolant interposé entre chaque paire d'ensembles adjacents permet de plaquer les ensembles du module les uns contre les autres pour limiter l'encombrement du module.

### 2. Procédé de fabrication

En référence à la figure 1, on a illustré deux modes de réalisation d'un procédé pour la fabrication d'un module.

Dans ces deux modes de réalisation, le procédé comprend une première étape de mise en place du (ou des) manchon(s) autour d'un (ou des) ensemble(s). Ce (ou ces) manchon(s) est (sont) mis en place de sorte qu'au moins un manchon soit interposé entre chaque paire d'ensembles adjacents.

Le manchon peut être constitué dans un matériau thermo-rétractable. Dans ce cas, le procédé comprend une étape de chauffage de l'ensemble et du manchon une fois le manchon mis en place de sorte que le manchon enserre l'ensemble sous l'effet de la chaleur.

En variante, le manchon peut être une bague annulaire élastique déformable dont les dimensions sont prévues de façon à ce que le manchon soit monté serré sur l'ensemble afin d'assurer son maintien en position durant l'assemblage du module. Dans ce cas, le manchon est de préférence monté autour de l'extrémité inférieure du corps de celui-ci, qui est en contact avec le couvercle de l'ensemble adjacent (les ensembles étant positionnés tête-bêche), présentant les dimensions les plus importantes radialement. Lorsque l'ensemble présente l'architecture précitée, une bague montée autour du corps dans sa portion destinée à être en contact avec le couvercle de l'ensemble adjacent suffit donc pour isoler l'ensemble des ensembles adjacent. La bague peut donc être dimensionnée pour être de largeur correspondant à celle de la jupe périphérique du couvercle.

Une fois le (ou les) manchon(s) mis en place, les différentes variantes du procédé de fabrication comprennent les étapes de :
- disposition des ensembles sur un support,
- application d'une force F sur les ensembles,
- positionnement de barrettes de connexion sur les ensembles, et de
- liaison des barrettes sur les ensembles.

Ces autres étapes diffèrent dans les deux modes de réalisation illustrés à la figure 1.

### 2.1. Premier mode de réalisation du procédé

On va maintenant décrire plus en détail les étapes spécifiques au premier mode de réalisation du procédé de fabrication de module.

### 2.1.1. Placement des ensembles de stockage d'énergie électrique

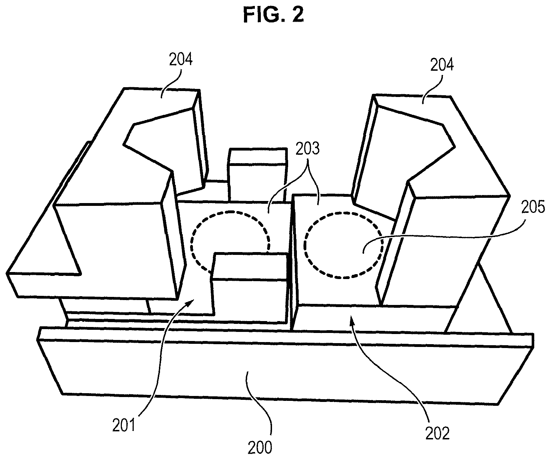

Le premier mode de réalisation du procédé comprend une étape 120 consistant à placer tous les ensembles du module sur un support 301, 302 qui sera décrit plus en détail dans la suite en référence aux outils de fabrication de module illustrés aux figures 2 à 4.

Plus précisément, chaque ensemble est posé sur le support au niveau de l'une de ses extrémités (fond ou couvercle), de sorte que les axes longitudinaux des ensembles s'étendent sensiblement parallèlement entre eux.

Avantageusement, les ensembles sont placés « *tête-bêche* », c'est-à-dire que les manchons d'ensembles adjacents sont situés sur des extrémités opposées des ensembles comme on le voit sur la figure 1.

### 2.1.2. Application d'une force

Dans une autre étape 130, le procédé comprend l'application d'au moins une force F (de préférence une pluralité de forces) sur les ensembles pour plaquer les ensembles les uns contre les autres. Cette force est appliquée selon une direction perpendiculaire aux axes longitudinaux des ensembles et dans un sens tendant à les rapprocher les uns des autres.

### 2.1.3. Positionnement des barrettes

Les barrettes sont ensuite positionnées (étape 140) sur les extrémités des ensembles opposés aux extrémités en contact avec le support.

Avantageusement, la position de chaque barrette est prédéterminée relativement à au moins deux plans de référence P1, P2 contenant chacun une direction parallèle aux axes longitudinaux des ensembles, indépendamment des positions réellement occupées par les ensembles - ces positions réelles pouvant varier d'un module à l'autre en fonction des jeux de montage liés aux variations de dimensions des ensembles, etc.

Ainsi, les positions des barrettes restent constantes lors de la réalisation de deux modules identiques, et ce quelles que soient les positions réelles des ensembles composant lesdits modules.

La constance de position des barrettes induit une constance dans la position de chacune des bornes de sortie du module destinées à être connectées à des appareillages électriques extérieurs. En effet, les bornes de sortie du module sont reliées aux barrettes.

On obtient donc un module dont les positions des bornes de sortie sont normalisées ce qui facilite son utilisation à l'échelle industrielle.

Les plans de référence sont définis relativement au support.

Dans tous les cas, la position de chacune des barrettes est définie préalablement à la fabrication du module, en tenant compte des variations possibles de dimensions des ensembles en fonction des jeux de montage et des variations de dimensions des pièces le constituant. En particulier, la position de chaque barrette est déterminée en considérant les tailles extrêmes que peuvent avoir les ensembles. On choisit alors comme position pour chaque barrette celle qui permet de relier n'importe qu'elle combinaison d'ensemble dont les dimensions sont comprises entre les tailles extrêmes.

Les plans de référence peuvent être perpendiculaires entre eux. L'un des plans de référence peut être défini comme étant le plan passant par les bornes de sortie du module pour limiter les risques d'inconstance dans la position des bornes de sortie. L'autre plan de référence peut être un plan de symétrie des ensembles, perpendiculaire au premier plan de référence. Ceci permet d'optimiser le dimensionnement des barrettes. En effet, la dispersion dans les positions des ensembles est réduite lorsque l'un des plans de référence est un plan de symétrie des ensembles. Il est ainsi possible de maximiser la surface de contact entre les barrettes et les ensembles.

### 2.1.4. Liaison des barrettes

Les barrettes sont ensuite liées aux ensembles. L'étape de liaison des barrettes sur les ensembles peut comprendre un soudage. Ce soudage peut être réalisé par toute méthode de soudage connu de l'homme du métier tel qu'un soudage LASER, un soudage par friction malaxage, etc.

L'étape de liaison peut également comprendre le déplacement d'un (ou de chaque) ensemble selon une direction verticale pour que chaque ensemble soit en appui contre un plan horizontal prédéterminé, notamment délimité par une paroi du support ou du masque des barrettes et contre la barrette. Ceci permet de gérer la dispersion des dimensions des différents ensembles selon la direction verticale. Ceci permet également de souder simultanément toutes les barrettes aux ensembles si on le souhaite. Ce déplacement d'un (ou de chaque) ensemble selon une direction verticale peut être obtenu par l'application d'une force F' selon une direction verticale tendant à soulever les ensembles.

### 2.1.5. Retournement des ensembles de stockage d'énergie électrique

Pour connecter électriquement les ensembles entre eux, il est nécessaire de lier leurs deux extrémités opposées à des barrettes électriquement conductrices.

Il est donc nécessaire de retourner (étape 150) les ensembles liés aux barrettes de sorte à lier les extrémités en contact avec le support à d'autres barrettes électriquement conductrices.

### 2.1.6. Liaison de barrettes sur les autres extrémités des ensembles de stockage d'énergie électrique

Une fois les ensembles retournés de sorte que les barrettes liées aux ensembles à l'étape précédente soient en contact avec le support, on met en œuvre une nouvelle étape de positionnement des barrettes, semblable à l'étape décrite au point 2.1.3.

Une force F peut être appliquée sur ceux-ci pour plaquer les uns contre les autres les ensembles soudés deux à deux à une de leurs extrémités de sorte que même les ensembles non encore soudés soient en contact intime.

De même, une force F' peut être appliquée sous les ensembles pour les déplacer selon une direction verticale afin que chaque ensemble soit en appui contre un plan horizontal prédéterminé.

Enfin, les barrettes sont soudées aux ensembles.

Les ensembles liés aux barrettes sont ensuite disposés dans un boîtier pour former le module.

### 2.2. Deuxième mode de réalisation du procédé

On va maintenant décrire plus en détail le deuxième mode de réalisation du procédé de fabrication de module.

Ce deuxième mode de réalisation diffère principalement du premier mode décrit ci-dessus en ce qu'il comprend une étape de réalisation de paires élémentaires d'ensembles, chaque paire élémentaire comportant deux ensembles liés à une barrette à l'une de leurs extrémités avant de placer les paires d'ensembles dans le support.

En réalisant des paires élémentaires d'ensembles, et en plaçant chacune de ces paires élémentaires sur le support de sorte que leurs barrettes soient en contact avec le support, on s'affranchit de l'étape de retournement 150 des ensembles mise en œuvre dans le premier mode de réalisation. On assemble également tous les ensembles au dernier moment, ce qui permet de pouvoir minimiser les conséquences d'éventuelles anomalies du procédé qui aboutiraient à des liaisons non conformes. Il est en effet moins souvent nécessaire de mettre au rebut la totalité du module.

Ceci permet de simplifier la manipulation des ensembles et limite les risques de dégradation des liaisons entre les barrettes et les ensembles lors de la fabrication du module.

En effet, l'étape de retournement peut s'avérer très difficile à mettre en œuvre lorsque le module fabriqué comprend un grand nombre d'ensembles, chaque ensemble pesant un poids non négligeable.

### 2.2.1. Réalisation de paires élémentaires

Dans une étape 20 du procédé, deux ensembles sont placés « *tête-bêche »* sur un support 201, 202 de sorte que leurs axes longitudinaux s'étendent verticalement.

Les ensembles sont ensuite poussés latéralement l'un contre l'autre par l'application d'une force F (étape 30).

Une fois les ensembles en contact, une barrette est positionnée sur leurs extrémités opposées au support (étape 40). L'un des (ou les deux) ensembles peu(ven)t être déplacé(s) verticalement de sorte à être plaqué(s) contre la barrette et de sorte à placer la barrette contre un plan de référence supérieur essentiellement horizontal et solidaire du support. La barrette est ensuite soudée sur les ensembles.

On obtient ainsi une paire élémentaire composée de deux ensembles et d'une barrette.

L'opération de réalisation de paires élémentaires est répétée le nombre de fois désirée en fonction du nombre d'ensembles que l'on souhaite pour le module.

### 2.2.2. Placement des paires élémentaires

Les paires élémentaires sont ensuite disposées (étape 50) sur le support 301, 302 de sorte que la barrette de chaque paire élémentaire soit en contact avec le support 301, 302.

Là encore, les paires élémentaires sont placées de sorte que les manchons d'ensembles adjacents soient situés sur des extrémités longitudinales opposées des ensembles. Plus précisément, on applique au moins deux forces de directions différentes dans le plan normal aux directions des axes longitudinaux des ensembles, de façon à assurer la compacité maximale dans ce plan. Les forces sont notamment perpendiculaires entre elles et ne comprennent qu'une composante située dans ce plan.

### 2.2.3. Application d'une force

Une force F est ensuite appliquée (étape 60) aux paires élémentaires pour plaquer les ensembles les uns contre les autres. Cette force est appliquée selon une direction perpendiculaire aux axes longitudinaux des ensembles et dans un sens tendant à les rapprocher les uns des autres.

### 2.2.4. Positionnement des barrettes

Dans une autre étape 70 du procédé, on positionne les barrettes sur les extrémités des ensembles, la position de chaque barrette étant prédéterminée relativement à au moins deux plans de référence parallèles aux axes longitudinaux des ensembles. Les barrettes sont notamment placées sur un masque coopérant avec des moyens de positionnement fixes du support.

Les barrettes sont ensuite liées aux ensembles comme décrit ci-dessus (déplacement éventuel des ensembles verticalement, et soudage des barrettes sur les ensembles).

Les ensembles liés aux barrettes sont ensuite disposés dans un boîtier pour former le module.

### 3. Outil de fabrication

On va maintenant décrire deux exemples d'outils pour la fabrication d'un module.

### 3.1. Premier mode de réalisation de l'outil

En référence à la figure 2, on a illustré un exemple d'outil permettant de mettre en œuvre l'opération de réalisation de paires élémentaires d'ensembles.

Le lecteur aura compris que cet outil peut également être utilisé pour fabrication un module comprenant uniquement deux ensembles.

L'outil comprend une embase 200 sur laquelle est disposé un support 201, 202 composé de deux socles mobiles en translation l'un par rapport à l'autre.

Chaque socle est destiné à recevoir un ensemble respectif.

Chaque socle du support 201, 202 comprend :
- un plateau 203 destiné à être en contact avec l'une des extrémités longitudinales de l'ensemble, et
- un appui 204 s'étendant perpendiculairement au plateau et dont la forme est adaptée à celle de l'enveloppe de l'ensemble. L'appui 204 est conformé ici de façon à entourer l'enveloppe cylindrique de l'ensemble essentiellement sur toute la hauteur de sa paroi latérale et sur une moitié de sa circonférence, et est en contact avec l'enveloppe, de préférence en plusieurs lieux de celui-ci.

Le plateau comprend également un poussoir 205 mobile en translation selon la direction verticale, parallèle à l'axe longitudinale de l'ensemble et permettant donc de modifier la position verticale de chacun des ensembles, notamment pour mettre les faces supérieures des ensembles au même niveau.

L'outil peut également comprendre une paroi supérieure, horizontale et notamment articulée sur le support par le biais de charnières essentiellement horizontales. Cette paroi peut alors former un plan de référence horizontal supérieur. Cette paroi est optionnelle et n'a pas été représentée sur la figure 2. Une telle paroi peut être ajourée pour permettre d'assurer la soudure de la barrette sur les ensembles au travers de celle-ci.

Le principe de fonctionnement de l'outil illustré à la figure 2 est le suivant. Un ensemble respectif est placé sur chaque socle. Les socles sont ensuite déplacés en translation l'un vers l'autre. Les plateaux et appuis des deux socles se rapprochent les uns des autres, les ensembles disposés sur les socles se rapprochent également l'un de l'autre. Lorsque les ensembles sont en contact l'un avec l'autre, les appuis de chaque socle permettent d'assurer un placage correct des ensembles l'un contre l'autre. Une barrette est positionnée sur les ensembles, puis elle est liée à ceux-ci. Éventuellement, les plateaux sont déplacés en translation verticalement à l'aide des poussoirs 205 pour déplacer les ensembles et la barrette mise en place sur ceux-ci vers un plan de référence supérieur de sorte à assurer un bon contact entre les ensembles et la barrette et un soudage amélioré de la barrette et des ensembles. Chacun des ensembles peut bien entendu être déplacé d'une hauteur distincte qui lui est propre.

### 3.2. Deuxième mode de réalisation de l'outil

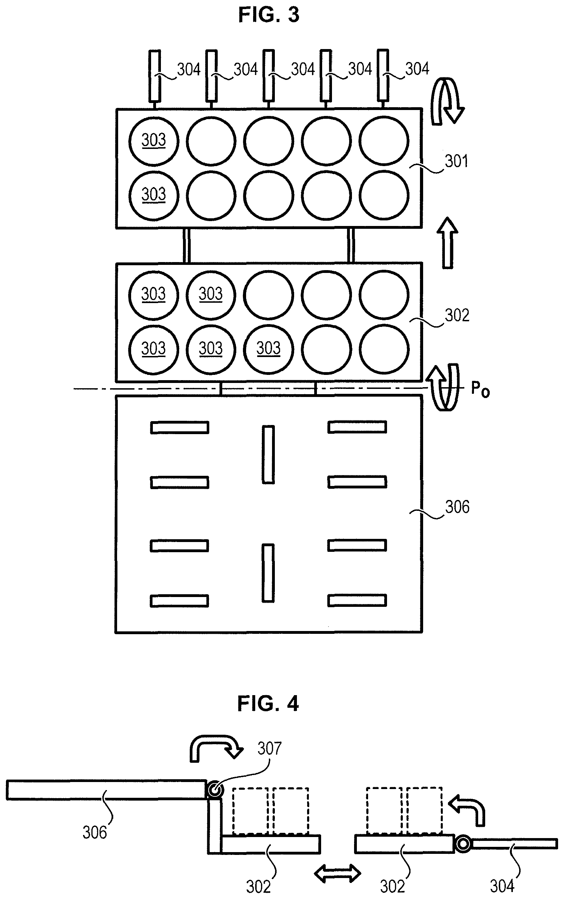

En référence aux figures 3 et 4 et 5A à 5D, on a illustré un autre outil pour la fabrication d'un module. Cet outil peut être utilisé seul ou en combinaison avec l'outil décrit dans le premier mode de réalisation de l'invention, les paires alors formées par l'outil selon le premier mode de réalisation de l'invention étant placées dans l'outil selon le deuxième mode de réalisation et qui va être décrit ci-après.

Comme on le voit sur les figures 3 et 4 représentant l'outil de façon schématique, l'outil comprend un support composé de deux bâtis 301, 302 comportant chacun une pluralité de plateaux 303. Ces bâtis 301, 302 sont mobiles en translation l'un par rapport à l'autre entre :
- une position écartée où les deux bâtis sont distants l'un de l'autre pour permettre le passage de câblage du module entre ceux-ci, et
- une position rapprochée où les bâtis sont en contact l'un avec l'autre.

Chaque plateau 303 est destiné à recevoir un ensemble respectif. Chaque plateau 303 est mobile en translation verticalement pour permettre le déplacement de son ensemble associé selon une direction sensiblement parallèle à son axe longitudinal.

L'outil comprend également des poussoirs 304 disposés sur au moins un des bâtis. Chaque poussoir 304 est mobile en rotation entre une position de repos et une position d'effort où le poussoir 304 est en contact avec l'un des ensembles pour appliquer une force F sur ceux-ci afin de les pousser contre un plan de référence, ici le plan de référence P0 représenté en pointillés sur la figure 3 et s'étendant dans un plan perpendiculaire à celui de la figure, la force F étant normale audit plan.

L'outil comprend également un couvercle 306 articulé sur le support par le biais de charnières 307 d'axe essentiellement horizontal, le couvercle étant mobile entre une position dégagée dans laquelle il n'est pas superposé avec les bâtis 301, 302 et une position dans laquelle il est superposé aux bâtis du support de sorte qu'il forme un plan de référence supérieur essentiellement horizontal. Les charnières 307 sont pour cela positionnées à une hauteur supérieure à celle des ensembles de stockage lorsque ceux-ci sont placés sur les plateaux respectifs 303 du support.

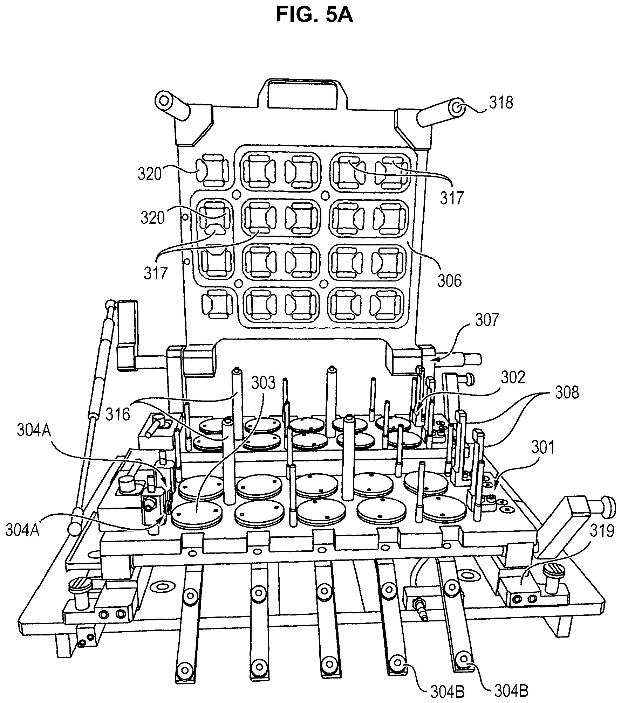

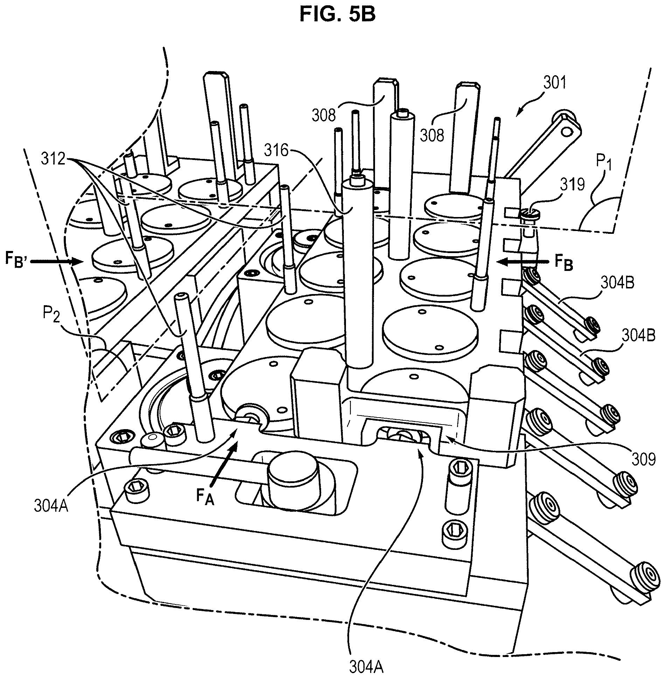

Les figures 5A à 5D montrent une variante du deuxième mode de réalisation de l'outil selon ce mode de réalisation, dans lequel les références identiques sont notées de la même façon que dans les figures 3 et 4. Sur ces figures, les plans de références sont un plan P1 s'étendant à une extrémité du module et un plan P2 perpendiculaire situé sur la ligne de contact des deux bâtis 301, 302 en position rapprochée.

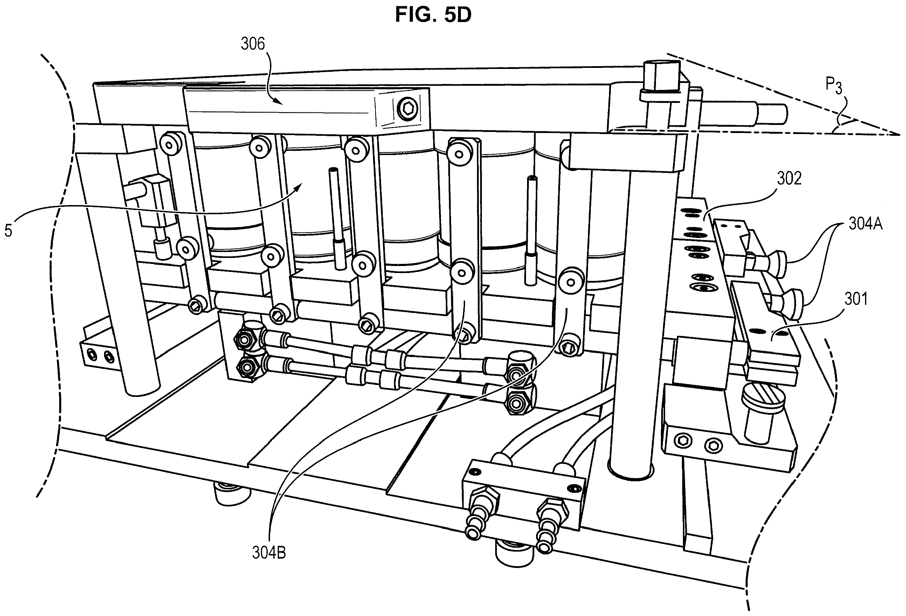

Pour matérialiser le plan P1, l'outil comprend des moyens mécaniques de butée 308, correspondant à des parois horizontales de butée située dans le plan P1 contre lesquelles les ensembles viennent en contact. Pour pousser les ensembles contre les moyens mécaniques 308, l'outil comprend des poussoirs 304A essentiellement horizontaux et situés à l'extrémité de l'outil opposés au plan P1. Ces poussoirs 304A s'étendent essentiellement perpendiculairement au plan P1 pour pousser les ensembles contre les faces de butée 308, selon une force F_{A} essentiellement horizontale. L'outil comprend également, situés de chaque côté du plan P2, des bras de poussée 304B reliés à chacun des bâtis 301, 302 (sur la figure, sont visibles uniquement les bras reliés au bâti 301). Ces bras s'étendent à chaque extrémité transversale de l'outil symétriquement relativement au plan P2. Ils sont mobiles en rotation relativement à un axe horizontal situé à chaque extrémité transversale du module et viennent en contact avec les ensembles au voisinage de la position dans laquelle ils sont verticaux, comme on le voit sur la figure 5D, de sorte qu'ils appliquent une force de poussée respective F_{B}, F_{B}' sur lesdits ensembles. Les forces de poussée F_{B}, F_{B}' appliquées respectivement sur les ensembles placés sur les bâtis 301, 302 sont symétriques relativement au plan P2 et perpendiculaires relativement à ce plan, à savoir de direction opposée, essentiellement horizontale, et d'intensité essentiellement identique.

Les bras de poussée 304B peuvent également appliquer sur les ensembles une force à composante verticale mais cette composante est compensée par la réaction du support sur l'ensemble et n'empêche pas le déplacement de l'ensemble. Les forces appliquées sur les ensembles à chaque extrémité de l'outil étant identiques, les ensembles se rejoignent au niveau du plan de référence P2.

On notera qu'on peut appliquer uniquement une force de poussée d'un côté du module et placer le plan de référence P2 du côté opposé du support (comme le plan P0) mais que cette configuration dans laquelle le plan P2 est un plan de symétrie du module est avantageuse, comme expliqué précédemment.

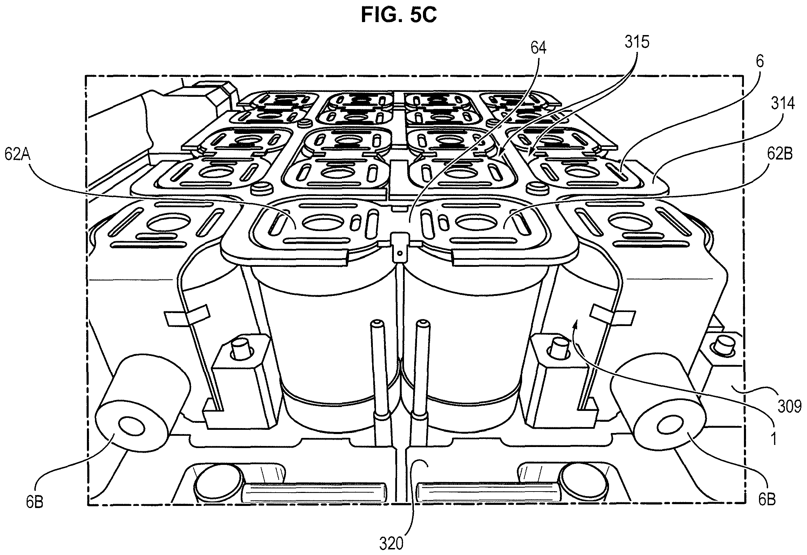

L'outil comprend également, solidaires des bâtis 301, 302, des moyens de positionnement 312 d'un masque 314, mieux visible sur la figure 5C, comportant une pluralité de dégagements 315 destiné à contenir les barrettes de liaison 6 destinées à connecter les ensembles entre eux. On notera que le masque 314 permet d'obtenir une position fixe des barrettes relativement aux plans de référence P1, P2. L'outil comprend d'ailleurs des moyens de maintien 309 des bornes de sortie 6B du module, reliées aux barrettes et donc également placées dans le masque. Les moyens 309 sont constitués d'une face de butée destinée à venir en contact avec les bornes 6B, dont la position est parfaitement déterminée au vu de la position des parois de butée 308. Comme on l'a indiqué, la forme des barrettes est choisie en fonction des tolérances de fabrication des ensembles, de sorte que les barrettes ne puissent être superposées qu'à un seul ensemble à la fois quels que soient les caractéristiques des ensembles placés dans le module. On voit bien sur la figure 5C que la barrette comporte deux portions rigides 62A, 62B reliées respectivement aux deux ensembles et une portion déformable 64 située au milieu des deux portions rigides et d'épaisseur moindre que les portions rigides.

L'outil comprend également des moyens de maintien de la position du couvercle 306 formant plan de référence supérieur P3 visible sur la figure 5D, constitués notamment par des bras verticaux 316, 318, respectivement solidaires du couvercle et du support et destinés à coopérer avec des moyens complémentaires (orifices 317 du couvercle et pions 319 du support), pour maintenir constante en tout point la distance entre le couvercle 306 et les bâtis 301, 302, afin de conserver un positionnement précis du plan de référence supérieur P3. On notera également que le couvercle 306 comprend des ajours 320 pour permettre d'atteindre les barrettes lorsque le couvercle 306 est fermé.

Le principe de fonctionnement de l'outil est le suivant.

L'organe de maintien, les bâtis et les poussoirs sont respectivement déplacés dans les positions dégagée, écartée, et de repos.

Les ensembles sont placés sur les plateaux du support. Les barrettes sont positionnées dans les emplacements de l'organe de maintien.

Une fois le câblage du module réalisé, les bâtis sont déplacés dans leur position rapprochée. Les poussoirs sont actionnés et se déplacent - en rotation pour les poussoirs 304B et en translation pour les poussoirs 304A - vers les ensembles jusqu'à ce que les ensembles des deux bâtis 301, 302 soient en contact au niveau du plan P2 et que les ensembles soient en contact contre les faces de butée 308 correspondant au plan P1. Les poussoirs appliquent donc sur les ensembles des forces F_{A}, F_{B} et F_{B}' tendant à les plaquer les uns contre les autres. Une fois les ensembles plaqués, on met en place le masque 314 dans lequel on a placé les barrettes tel que montré à la figure 5C, sur les moyens de positionnement 312 de l'outil. Les bornes de sortie 6B viennent alors en butée contre les moyens de maintien correspondant 309.

Le couvercle 306 est déplacé en rotation de sorte à venir se placer au-dessus des ensembles, à la hauteur prescrite pour former le plan de référence horizontal P3. Les plateaux 303 du support sont alors déplacés verticalement pour plaquer les ensembles et les barrettes 6 contre le couvercle 306. Si les ensembles appartenant à une même paire ne sont pas de la même hauteur, il est possible que les barrettes déjà soudées sous les ensembles se plient légèrement au niveau de leur portion 64 de sorte que les barrettes 6 situées sur les ensembles soient bien plaquées contre le couvercle 306. Enfin, les barrettes 6 sont soudées sur les ensembles grâce aux ajours 320 qui sont pratiqués dans le couvercle. Du fait du plaquage des barrettes contre le plan de référence supérieur P3, la surface de la barrette et celle associée de l'ensemble sont bien parallèles ce qui garantit un soudage de bonne qualité.

### 4. Conclusions

Grâce aux procédés et outils décrits ci-dessus, on peut donc fabriquer un module à partir d'ensembles dont la dispersion des dimensions est importante.

Avec les procédés de fabrication de l'art antérieur, un ensemble dont les dimensions étaient trop différentes de celles des autres ensembles composant le module ne pouvait pas être utilisé.

Le lecteur aura compris que de nombreuses modifications peuvent être apportées aux procédés, outils et modules présentés ci-dessus sans sortir matériellement des nouveaux enseignements décrits ici.

Par conséquent, toutes les modifications de ce type sont destinées à être incorporées à l'intérieur de la portée des revendications jointes.

## Revendications

1. Procédé de fabrication d'un module de stockage d'énergie électrique incluant des ensembles de stockage d'énergie électrique (5), chaque ensemble comportant une enveloppe externe (1, 2) et un élément de stockage d'énergie électrique disposé à l'intérieur de l'enveloppe, le procédé comprenant la mise en place (10) d'au moins un manchon (3) électriquement isolant autour de l'enveloppe (1) d'au moins un ensemble de sorte qu'un manchon soit interposé entre chaque paire d'ensembles adjacents, l'au moins un manchon recouvrant au moins partiellement l'enveloppe de l'au moins un ensemble,
ce procédé étant **caractérisé en ce qu'**il comprend en outre les étape ultérieures successives suivantes :
- la pose (20, 120) de l'une des extrémités de chaque ensemble sur un support, de sorte que les axes longitudinaux (4) des ensembles s'étendent sensiblement parallèlement entre eux,
- l'application (30, 130) d'au moins deux forces perpendiculaires entre elles (F, F_{A}, F_{B}, F_{B}') sur les ensembles, selon une direction perpendiculaire aux axes longitudinaux des ensembles, pour les plaquer les uns contre les autres, et contre au moins deux plans de référence (P1, P2), les plans de référence étant perpendiculaires entre eux, au moins l'un des plans de référence (P2) étant de préférence un plan de symétrie des ensembles,
- le positionnement (40, 140) d'au moins une barrette (6) électriquement conductrice sur les ensembles de sorte à connecter électriquement lesdits ensembles, la position de l'au moins une barrette étant prédéterminée relativement à au moins un plan de référence (P0 ; P1, P2) du support contenant une direction parallèle à celle des axes longitudinaux des ensembles, et
- la liaison, notamment par soudage, de l'au moins une barrette sur les ensembles.

2. Procédé selon la revendication précédente, dans lequel la position de ladite barrette (6) est prédéterminée et indépendante des positions réelles desdits ensembles (5).

3. Procédé selon l'une quelconque des revendications précédentes, dans lequel le ou les plans de référence (P0 ; P1, P2) ne contiennent aucun des axes longitudinaux des ensembles, l'étape d'application d'une force tendant à plaquer les ensembles les uns contre les autres et contre le ou les plans de référence du module.

4. Procédé selon l'une quelconque des revendications précédentes, dans lequel lors de l'étape de mise en place, chaque manchon (3) est positionné de sorte à recouvrir l'une des extrémités d'une enveloppe (1) respective, l'étape de pose sur un support étant mise en oeuvre de sorte que les manchons des ensembles adjacents sont situés sur des extrémités longitudinales opposées des ensembles disposés côte à côte.

5. Procédé selon l'une quelconque des revendications précédentes, dans lequel l'étape de positionnement de l'au moins une barrette comprend les sous-étapes consistant à :
- agencer l'au moins une barrette sur un masque de maintien (314) à une position prédéterminée relativement audit ou audits plans de référence (P1, P2), et
- apposer le masque de maintien sur des moyens de positionnement du support.

6. Procédé selon l'une quelconque des revendications précédentes, dans lequel l'étape de liaison comprend une sous-étape consistant à déplacer au moins un ensemble, notamment chaque ensemble, selon une direction sensiblement parallèle aux axes longitudinaux des ensembles, de sorte que les ensembles soient en appui contre l'au moins une barrette.

7. Procédé selon la revendication 6, dans lequel, lors de la sous-étape consistant à déplacer au moins un ensemble selon une direction sensiblement parallèle aux axes longitudinaux des ensembles, on déplace les ensembles et les barrettes de sorte que les barrettes soient en appui contre un plan de référence du support, dit « plan de référence perpendiculaire » (P3), essentiellement perpendiculaire aux axes longitudinaux des ensembles placés sur le support.

8. Procédé selon l'une quelconque des revendications précédentes, lequel comprend en outre une étape de réalisation de paires élémentaires d'ensembles, préalablement à l'étape de pose, ladite étape de réalisation comprenant les sous-étapes consistant à :
a) disposer (20) deux ensembles de sorte que leurs axes longitudinaux s'étendent sensiblement parallèlement,
b) pousser (30) les deux ensembles l'un contre l'autre,
c) installer et souder (40) une barrette de connexion sur les deux ensembles,
d) répéter les étapes a) à c) pour obtenir une pluralité de paires élémentaires,
l'étape de pose (50) des ensembles consistant à placer l'extrémité soudée à la barrette de connexion de chaque paire élémentaire sur le support de sorte que la barrette de connexion de chaque paire élémentaire soit en contact avec le support.

9. Procédé selon la revendication 8 en combinaison avec la revendication 6, dans lequel lors de l'étape de déplacement des ensembles selon leurs axes longitudinaux, on déforme la barrette (6) reliée à la paire d'ensembles de sorte que la barrette située à l'extrémité longitudinale opposée soit en appui avec le plan de référence perpendiculaire (P3), la barrette comportant de préférence pour ce faire deux portions rigides (62A, 62B) reliées aux ensembles et une portion déformable (64) s'étendant entre les deux portions rigides.

10. Procédé selon la revendication 9, dans lequel, lors de l'étape de réalisation de paires élémentaires, la sous-étape consistant à installer et souder (40) comprend le déplacement d'au moins un ensemble, notamment chaque ensemble, selon une direction sensiblement parallèle aux axes longitudinaux des ensembles, de sorte que les ensembles soient en appui contre la barrette de connexion, et éventuellement que la barrette soit en contact avec un plan de référence perpendiculaire aux axes longitudinaux.

11. Outil de fabrication (200, 300) pour la mise en œuvre d'un procédé de fabrication d'un module de stockage d'énergie électrique selon l'une des revendications 1 à 10, ce module incluant des ensembles de stockage d'énergie électrique (5), chaque ensemble comportant une enveloppe externe (1, 2) et un élément de stockage d'énergie électrique disposé à l'intérieur de l'enveloppe, au moins un manchon électriquement isolant (3) étant mis en place autour de l'enveloppe externe (1) d'au moins l'un des ensembles de sorte qu'un manchon soit interposé entre chaque paire d'ensembles adjacents, cet outil étant **caractérisé en ce qu'**il comprend :
- au moins un support (203 ; 301, 302) pour la pose de l'une des extrémités de chaque ensemble, de sorte que les axes longitudinaux (4) des ensembles s'étendent sensiblement parallèlement entre eux,
- au moins deux applicateurs de force (204 ; 304 ; 304A, 304B) pour l'application d'au moins deux forces perpendiculaires entre elles (F, F_{A}, F_{B}, F_{B}') sur les ensembles selon une direction sensiblement perpendiculaire aux axes longitudinaux des ensembles, ces deux forces tendant à plaquer les ensembles les uns contre les autres et contre au moins deux plans de référence (P1, P2) perpendiculaires entre eux, au moins l'un des plans de référence (P2) étant de préférence un plan de symétrie des ensembles.

12. Outil selon la revendication précédente, comprenant également des moyens de positionnement (312) solidaires du support, d'au moins une barrette électriquement conductrice (6) sur les ensembles de sorte à connecter électriquement lesdits ensembles, la position de l'au moins une barrette étant prédéterminée relativement à au moins un plan de référence (P0, P1, P2) du support contenant une direction parallèle aux axes longitudinaux des ensembles.

13. Outil selon l'une des deux revendications précédentes, dans lequel le support comprend au moins deux plateaux (203, 303), chaque plateau étant destiné à recevoir un ensemble respectif, au moins un plateau, notamment chaque plateau, étant mobile en translation pour déplacer au moins un ensemble, notamment chaque ensemble selon une direction sensiblement parallèle aux axes longitudinaux des ensembles, de sorte que les ensembles soient en appui contre l'au moins une barrette électriquement conductrice (6), et éventuellement que la barrette soit en contact avec un plan de référence perpendiculaire aux axes longitudinaux.

14. Outil selon la revendication précédente, dans lequel au moins un plateau, notamment chaque plateau, est mobile en translation selon une direction perpendiculaire aux axes longitudinaux des ensembles pour plaquer au moins un ensemble, notamment chaque ensemble, contre les autres ensembles.

15. Outil selon l'une des quatre revendications précédentes, dans lequel le support est composé de deux bâtis (301, 302) destinés à recevoir chacun au moins un ensemble, lesdits bâtis étant mobiles en translation l'un par rapport à l'autre entre :
- une position écartée où les deux bâtis sont distants l'un de l'autre pour permettre le passage de câblage du module entre ceux-ci, et
- une position rapprochée où les bâtis sont en contact l'un avec l'autre.

16. Module de stockage d'énergie électrique incluant des ensembles de stockage d'énergie électrique, chaque ensemble (5) comportant une enveloppe externe (1) et un élément de stockage d'énergie électrique disposé à l'intérieur de l'enveloppe, ce module étant obtenu par le procédé selon l'une des revendications 1 à 10, **caractérisé en ce que** le module comprend en outre :
- au moins un manchon (3) électriquement isolant autour de l'enveloppe d'au moins l'un des ensembles de sorte qu'un manchon soit interposé entre chaque paire d'ensembles adjacents, l'au moins un manchon recouvrant au moins partiellement l'enveloppe externe de l'ensemble, les ensembles étant plaqués les uns contre les autres de sorte que chaque manchon soit en contact avec au moins l'un des ensembles adjacents,
- au moins une barrette (6) électriquement conductrice sur les ensembles de sorte à connecter électriquement lesdits ensembles, la position de l'au moins une barrette étant prédéterminée relativement à au moins un plan de référence (P1, P2) contenant au moins une direction parallèle aux axes longitudinaux des ensembles, ladite barrette étant une pièce qui s'étend longitudinalement, et qui comprend une portion déformable (64) entre deux portions rigides (62A, 62B), chacune des portions rigides étant reliée respectivement à un ensemble (5).

17. Module selon la revendication précédente, dans lequel la position de l'au moins une barrette est indépendante de la position réelle des ensembles du module.

18. Module selon l'une des deux revendications précédentes, lequel comprend en outre un boîtier dans lequel sont insérés les ensembles, le boîtier incluant au moins une paroi et un fond, le au moins un plan de référence étant défini relativement à la ou l'au moins une des parois du boîtier.

## Patentansprüche

1. Verfahren zur Herstellung eines Moduls zur Speicherung von elektrischer Energie, das elektrische Energiespeicherbaugruppen (5) umfasst, wobei jede Baugruppe einen Außenmantel (1, 2) und ein im Mantel angeordnetes elektrisches Energiespeicherelement aufweist, wobei das Verfahren das Anordnen (10) zumindest einer elektrisch isolierenden Muffe (3) um den Mantel (1) herum zumindest einer Baugruppe umfasst, so dass zwischen jedem Paar benachbarter Baugruppen eine Muffe angeordnet ist, wobei die zumindest eine Muffe zumindest teilweise den Mantel der zumindest einen Baugruppe bedeckt,
wobei dieses Verfahren **dadurch gekennzeichnet ist, dass** es ferner die folgenden aufeinanderfolgenden Schritte umfasst:
- Aufsetzen (20, 120) eines der Enden jeder Baugruppe auf einer Halterung, so dass sich die Längsachsen (4) der Baugruppen im Wesentlichen parallel zueinander erstrecken,
- Beaufschlagung (30, 130) mit zumindest zwei senkrecht zueinander wirkenden Kräften (F, F_{A}, F_{B}, F_{B}') auf die Baugruppen in einer Richtung senkrecht zu den Längsachsen der Baugruppen, um sie aneinander und gegen zumindest zwei Bezugsebenen (P1, P2) zu drücken, wobei die Bezugsebenen senkrecht zueinander stehen, wobei zumindest eine der Bezugsebenen (P2) vorzugsweise eine Symmetrieebene der Baugruppen ist,
- die Positionierung (40, 140) zumindest einer elektrisch leitfähigen Anschlussleiste (6) auf den Baugruppen um die Baugruppen elektrisch zu verbinden, wobei die Position der zumindest einen Anschlussleiste in Bezug auf zumindest eine Bezugsebene (P0; P1, P2) der Halterung vorgegeben ist, die eine Richtung parallel zu derjenigen der Längsachsen der Baugruppen enthält, und
- die Verbindung, insbesondere durch Schweißen, der zumindest einen Anschlussleiste an den Baugruppen.

2. Verfahren nach dem vorstehenden Anspruch, wobei die Position der Anschlussleiste (6) vorgegeben und unabhängig von den tatsächlichen Positionen der Baugruppen (5) ist.

3. Verfahren nach einem der vorstehenden Ansprüche, wobei die Bezugsebene (n) (P0; P1, P2) keine der Längsachsen der Baugruppen enthält/enthalten, wobei der Schritt mit der Beaufschlagung dazu strebt, die Baugruppen aneinander und gegen die Bezugsebene(n) des Moduls zu drücken.

4. Verfahren nach einem der vorstehenden Ansprüche, wobei beim Montageschritt jede Muffe (3) so positioniert ist, dass sie eines der Enden eines jeweiligen Mantels (1) abdeckt, wobei der Schritt des Aufsetzens auf einer Halterung so durchgeführt wird, dass die Muffen benachbarter Baugruppen an gegenüberliegenden Längsenden der nebeneinander angeordneten Baugruppen angeordnet sind.

5. Verfahren nach einem der vorstehenden Ansprüche, wobei der Schritt des Positionierens der zumindest einen Anschlussleiste folgende Teilschritte umfasst:
- Anordnen der zumindest einen Anschlussleiste auf einer Haltemaske (314) an einer vorbestimmten Position in Bezug auf die Bezugsebene(n) (P1, P2), und
- Befestigen der Haltemaske an Mitteln zur Positionierung der Halterung.

6. Verfahren nach einem der vorstehenden Ansprüche, wobei der Verbindungsschritt einen Teilschritt umfasst, bei dem zumindest eine Baugruppe, einschließlich jeder Baugruppe, in eine Richtung bewegt wird, die im Wesentlichen parallel zu den Längsachsen der Baugruppen verläuft, so dass die Baugruppen an der zumindest einen Anschlussleiste anliegen.

7. Verfahren nach Anspruch 6, wobei während des Teilschritts des Bewegens zumindest einer Baugruppe in eine Richtung, die im Wesentlichen parallel zu den Längsachsen der Baugruppen ist, die Baugruppen und die Anschlussleisten so bewegt werden, dass die Anschlussleisten an einer Bezugsebene der Halterung, die sogenannte "senkrechte Bezugsebene" (P3) anliegen, die im Wesentlichen senkrecht zu den Längsachsen der auf der Halterung angeordneten Baugruppen steht.

8. Verfahren nach einem der vorstehenden Ansprüche, das ferner einen Schritt zum Herstellen von Elementpaaren von Baugruppen vor dem Schritt des Aufsetzens umfasst, wobei der Herstellungsschritt die Teilschritte beinhaltet, die aus Folgendem bestehen:
a) zwei Baugruppen (20) so anordnen, so dass sich ihre Längsachsen im Wesentlichen parallel erstrecken,
b) die beiden Baugruppen aneinanderdrücken (30),
c) eine Anschlussleiste an beiden Baugruppen anbringen und schweißen (40),
d) die Schritte a) bis c) wiederholen, um eine Vielzahl von Elementpaaren zu erhalten,
der Schritt des Aufsetzens (50) der Baugruppen besteht daraus, das geschweißte Ende an der Anschlussleiste jedes Elementpaares auf der Halterung zu platzieren, so dass die Anschlussleiste jedes Elementpaares mit der Halterung in Kontakt steht.

9. Verfahren nach Anspruch 8 in Kombination mit Anspruch 6, wobei beim Schritt des Bewegens der Baugruppen entlang ihrer Längsachse die mit dem Baugruppenpaar verbundene Anschlussleiste (6) so verformt wird, dass die Anschlussleiste am gegenüberliegenden Längsende an der senkrechten Bezugsebene (P3) anliegt, wobei die Anschlussleiste vorzugsweise dafür zwei mit den Baugruppen verbundene starre Abschnitte (62A, 62B) und einen sich zwischen den beiden starren Abschnitten erstreckenden verformbaren Abschnitt (64) umfasst.

10. Verfahren nach Anspruch 9, wobei beim Herstellungsschritt der Elementpaare der aus Einbauen und Schweißen (40) bestehende Teilschritt das Bewegen von zumindest einer Baugruppe umfasst, insbesondere jeder Baugruppe, in einer Richtung im Wesentlichen parallel zu den Längsachsen der Baugruppen, so dass die Baugruppen an der Anschlussleiste anliegen und eventuell, dass die Anschlussleiste in Kontakt mit einer Bezugsebene senkrecht zu den Längsachsen steht.

11. Fertigungswerkzeug (200, 300) zum Einsetzen eines Verfahrens zur Herstellung eines Moduls zur Speicherung von elektrischer Energie nach einem der Ansprüche 1 bis 10, wobei das Modul elektrische Energiespeicherbaugruppen (5) umfasst, wobei jede Baugruppe einen Außenmantel (1, 2) und ein im Mantel angeordnetes elektrisches Energiespeicherelement aufweist, wobei zumindest eine elektrisch isolierende Muffe (3) um den Außenmantel (1) herum zumindest eine Baugruppe umfasst, so dass zwischen jedem Paar benachbarter Baugruppen eine Muffe angeordnet ist, wobei dieses Werkzeug Folgendes umfasst:
- zumindest eine Halterung (203; 301, 302) zum Aufsetzen eines der Enden jeder Baugruppe, so dass sich die Längsachsen (4) der Baugruppen im Wesentlichen parallel zueinander erstrecken,
- zumindest zwei Kraftapplikatoren (204; 304; 304A, 304B) zum Aufbringen von zumindest zwei senkrecht zueinander stehenden Kräften (F, F_{A}, F_{B}, F_{B}') auf die Baugruppen in einer Richtung im Wesentlichen senkrecht zu den Längsachsen der Baugruppen, wobei diese beiden Kräfte dazu neigen, die Baugruppen aneinander und gegen zumindest zwei zueinander senkrechte Bezugsebenen (P1, P2) zu drücken, wobei zumindest eine der Bezugsebenen (P2) vorzugsweise eine Symmetrieebene der Baugruppen ist.

12. Werkzeug nach dem vorstehenden Anspruch, umfassend auch Mittel (312) zum Positionieren integral mit der Halterung, zumindest einer elektrisch leitfähigen Anschlussleistes (6) auf den Baugruppen, um die Baugruppen elektrisch zu verbinden, wobei die Position der zumindest einen Anschlussleiste in Bezug auf zumindest eine Bezugsebene (P0; P1, P2) der Halterung vorgegeben ist, die eine Richtung parallel zu den Längsachsen der Baugruppen enthält.

13. Werkzeug nach einem der beiden vorstehenden Ansprüche, wobei die Halterung zumindest zwei Platten (203, 303) umfasst, wobei jede Platte dazu bestimmt ist, eine jeweilige Baugruppe aufzunehmen, wobei zumindest eine Platte, insbesondere jede Platte, translatorisch beweglich ist, um zumindest eine Baugruppe, insbesondere jede Baugruppe, in einer Richtung im Wesentlichen parallel zu den Längsachsen der Baugruppen zu bewegen, so dass die Baugruppen an der zumindest einen elektrisch leitfähigen Anschlussleiste (6) anliegen, und eventuell, dass die Anschlussleiste mit einer Bezugsebene senkrecht zu den Längsachsen in Kontakt steht.

14. Werkzeug nach dem vorstehenden Anspruch, wobei zumindest eine Platte, insbesondere jede Platte, translatorisch in einer Richtung senkrecht zu den Längsachsen der Baugruppen beweglich ist, um zumindest eine Baugruppe, insbesondere jede Baugruppe an die anderen Baugruppen anzudrücken.

15. Werkzeug nach einem der vier vorstehenden Ansprüche, wobei die Halterung aus zwei Rahmen (301, 302) besteht, die jeweils dazu bestimmt sind, zumindest eine Baugruppe aufzunehmen, wobei die Rahmen translatorisch gegeneinander verschiebbar sind zwischen:
- einer beabstandeten Stellung, in der die beiden Rahmen voneinander entfernt sind, um den Durchgang der Verkabelung des Moduls dazwischen zu ermöglichen, und
- eine angenäherte Stellung, in der die Rahmen miteinander in Kontakt stehen.

16. Elektrisches Energiespeichermodul mit elektrischen Energiespeicherbaugruppen, wobei jede Baugruppe (5) einen Außenmantel (1) und ein im Mantel angeordnetes elektrisches Energiespeicherelement aufweist, wobei dieses Modul durch das Verfahren nach einem der Ansprüche 1 bis 10 erzielt wird, **dadurch gekennzeichnet, dass** das Modul ferner Folgendes umfasst:
- zumindest eine elektrisch isolierende Muffe (3) um den Mantel zumindest eine der Baugruppen, so dass eine Muffe zwischen jedem Paar benachbarter Baugruppen angeordnet ist, wobei die zumindest eine Muffe den Außenmantel der Baugruppe zumindest teilweise bedeckt, wobei die Baugruppen aneinander gedrückt werden, so dass jede Muffe mit zumindest einer der benachbarten Baugruppen in Kontakt steht,
- zumindest eine elektrisch leitfähiges Anschlussleiste (6) auf den Baugruppen, um die Baugruppen elektrisch zu verbinden, wobei die Position der zumindest einen Anschlussleiste in Bezug auf zumindest eine Bezugsebene (P1, P2) vorgegeben ist, die zumindest eine Richtung parallel zu den Längsachsen der Baugruppen enthält, wobei die Anschlussleiste ein sich in Längsrichtung erstreckender Teil ist, und die einen verformbaren Abschnitt (64) zwischen zwei starren Abschnitten (62A, 62B) umfasst, wobei jeder der starren Abschnitte mit einer Baugruppe (5) verbunden ist.

17. Modul nach dem vorstehenden Anspruch, wobei die Position der zumindest einen Anschlussleiste unabhängig von der tatsächlichen Position der Modulbaugruppen ist.

18. Modul nach einem der beiden vorstehenden Ansprüche, das ferner ein Gehäuse umfasst, in das die Baugruppen eingesetzt sind, wobei das Gehäuse zumindest eine Wand und einen Boden umfasst, wobei die zumindest eine Bezugsebene in Bezug auf die oder zumindest einen Wand/den Wänden des Gehäuses definiert ist.

## Claims

1. A method for manufacturing an electrical energy storage module including electrical energy storage assemblies (5), each assembly including an external cover (1, 2) and an electrical energy storage element positioned inside the cover, the method comprising the setting into place (10) of at least one electrically insulating sleeve (3) around the cover (1) of at least one assembly so that a sleeve is interposed between each pair of adjacent assemblies, the at least one sleeve at least partly covering the cover of the at least one assembly,
this method being **characterized in that** it further comprises the subsequent successive following steps :
- the placement (20, 120) of one of the ends of each assembly on a support, so that the longitudinal axes (4) of the assemblies extend substantially parallel with each other,
- the application (30, 130) of at least two perpendicular forces (F, F_{A}, F_{B}, F_{B}') on the assemblies along a direction substantially perpendicular to the longitudinal axes of the assemblies, to flatten them against each other and against at least two reference planes (P1, P2), the reference planes being perpendicular to each other, at least one of the reference planes (P2) preferably being a plane of symmetry of the assemblies,
- the positioning (40, 140) of at least one electrically conducting strap (6) on the assemblies so as to electrically connect said assemblies, the position of the at least one strap being predetermined relatively to at least one reference plane (P0; P1; P2) of the support containing a direction parallel to that of the longitudinal axes of the assemblies, and
- the connection, notably by welding, of the at least one strap on the assemblies.

2. The method according to the preceding claim, wherein the position of said strap (6) is predetermined and independent of the actual positions of said assemblies (5).

3. The method according to any one of the preceding claims, wherein the reference plane(s) (P0; P1, P2) do not contain any of the longitudinal axes of the assemblies, the step for applying a force tending to flatten the assemblies against each other and against the reference plane(s) of the module.

4. The method according to any one of the preceding claims, wherein during the placement step, each sleeve (3) is positioned so as to cover one of the ends of a respective cover (1), the placement step on a support being applied so that the sleeves of the adjacent assemblies are located on opposite longitudinal ends of the assemblies positioned side by side.

5. The method according to any one of the preceding claims, wherein the step for positioning the at least one strap comprises substeps consisting of:
- laying out the at least one strap on a supporting mask (314) at a predetermined position relatively to said reference plane(s) (P1, P2), and
- affixing the supporting mask on means for positioning the support.

6. The method according to any one of the preceding claims, wherein the connection step comprises a substep consisting of moving at least one assembly, notably each assembly, along a direction substantially parallel to the longitudinal axes of the assemblies, so that the assemblies are bearing against the at least one strap.

7. The method according to claim 6, wherein, during the substep consisting of moving at least one assembly along a direction substantially parallel to the longitudinal axes of the assemblies, the assemblies and the straps are moved so that the straps are bearing against a so-called "perpendicular" reference plane (P3) of the support, essentially perpendicular to the longitudinal axes of the assemblies placed on the support.

8. The method according to any one of the preceding claims, which further comprises a step for producing elementary pairs of assemblies prior to the placement step, said production step comprising the substeps consisting of:
a) positioning (20) two assemblies so that their longitudinal axes extend substantially parallel to each other,
b) pushing (30) both assemblies against each other,
c) installing and welding (40) a connecting strap on both assemblies,
d) repeating steps a) to c) in order to obtain a plurality of elementary pairs,
the step (50) for placing the assemblies consisting of placing the end welded to the connecting strap of each elementary pair on the support so that the connecting strap of each elementary pair is in contact with the support.

9. The method according to claim 8 in combination with claim 6, wherein, during the step for moving the assemblies along the longitudinal axes, the strap (6) connected to the pair of assemblies is deformed so that the strap located at the opposite longitudinal end is supported with the perpendicular reference plane (P3), the strap preferably including, for doing this, two rigid portions (62A, 62B) connected to the assemblies and a deformable portion (64) extending between both rigid portions.

10. The method according to claim 9, wherein, during the step for producing elementary pairs, the substep consisting of installing and welding (40) comprises the displacement of at least one assembly, notably each assembly, along a direction substantially parallel to the longitudinal axes of the assemblies, so that the assemblies are bearing against the connecting strap, and optionally that the strap is in contact with a reference plane perpendicular to the longitudinal axes.

11. A manufacturing tool (200, 300) for applying a method for manufacturing an electrical energy storage module according to one of claims 1 to 10, this module including electrical energy storage assemblies (5), each assembly including an external cover (1, 2) and an electrical energy storage element positioned inside the cover, at least one electrically insulating sleeve (3) being set into place around the external cover (1) of at least one of the assemblies so that a sleeve is interposed between each pair of adjacent assemblies, this tool being **characterized in that** it comprises:
- at least one support (203; 301, 302) for placing one of the ends of each assembly, so that the longitudinal axes (4) of the assemblies extend substantially parallel to each other,
- at least two force applicators (204; 304; 304A, 304B) for applying at least two perpendicular forces (F, F_{A}, F_{B}, F_{B}') on the assemblies along a direction substantially perpendicular to the longitudinal axes of the assemblies, these two forces tending to flatten the assemblies against each other and against at least two reference planes (P1, P2), the reference planes being perpendicular to each other, at least one of the reference planes (P2) preferably being a plane of symmetry of the assemblies.

12. The tool according to the preceding claim, also comprising means (312) secured to the support, for positioning at least one electrically conducting strap (6) on the assemblies so as to electrically connect said assemblies, the position of the at least one strap being predetermined relatively to at least one reference plane (P0, P1, P2) of the support containing a direction parallel to the longitudinal axes of the assemblies.

13. The tool according to one of both preceding claims, wherein the support comprises at least two trays (203, 303), each tray being intended for receiving a respective assembly, at least one tray, notably each tray, being translationally movable so as to move at least one assembly, notably each assembly, along a direction substantially parallel to the longitudinal axes of the assemblies, so that the assemblies are bearing against the at least one electrically conducting strap (6), and optionally that the strap is in contact with a reference plane perpendicular to the longitudinal axes.

14. The tool according to the preceding claim, wherein at least one tray, notably each tray, is translationally movable along a direction perpendicular to the longitudinal axes of the assemblies in order to flatten at least one assembly, notably each assembly, against the other assemblies.

15. The tool according to one of the four preceding claims, wherein the support consists of two frames (301, 302) intended to each receive at least one assembly, said frames being translationally movable relatively to each other between:
- a separate position where both frames are distant from each other in order to allow the passing of wiring of the module between the latter, and
- a closer position where the frames are in contact with each other.

16. An electrical energy storage module including electrical energy storage assemblies, each assembly (5) comprising an external cover (1) and an electric energy storage element positioned inside the cover, this module being obtained by the method according to anyone of claims 1 to 10, **characterized in that** the module further comprises:
- at least one electrically insulating sleeve (3) around the cover of at least one of the assemblies so that a sleeve is interposed between each pair of adjacent assemblies, the at least one sleeve at least partly covering the external cover of the assembly, the assemblies being flattened against each other so that each sleeve is in contact with at least one of the adjacent assemblies,
- at least one electrically conducting strap (6) on the assemblies so as to electrically connect said assemblies, the position of the at least one strap being predetermined relatively to at least one reference plane (P1, P2) containing at least one direction parallel to the longitudinal axes of the assemblies, said strap being a part which extends longitudinally, and which comprises a deformable portion (64) between two rigid portions (62A, 62B), each of the rigid portions being respectively connected to an assembly (5).

17. The module according to the preceding claim, wherein the position of the at least one strap is independent of the actual position of the assemblies of the module.

18. The module according to one of the two preceding claims, which further comprises a casing in which are inserted the assemblies, the casing including at least one wall and a bottom, the at least one reference plane being defined relatively to the or at least one of the walls of the casing.
